# EUROPÄISCHE PATENTSCHRIFT

(11) **EP 2 348 933 B1**
(45) Veröffentlichungstag und Bekanntmachung des Hinweises auf die Patenterteilung: **21.11.2012**
(21) Anmeldenummer: 08803960.7
(22) Anmeldetag: 10.09.2008
(51) Int. Cl.: A47J 37/06, A47J 37/07

(54) **GRILL**
GRILL
BARBECUE

(43) Veröffentlichungstag der Anmeldung: 03.08.2011
(73) Patentinhaber: Jabs, Hartmut, 8004 Zürich (CH)
(72) Erfinder: Jabs, Hartmut, 8004 Zürich (CH)
(74) Vertreter: Flötotto, Hubert
(86) Internationale Anmeldenummer: PCT/EP2008/061993
(87) Internationale Veröffentlichungsnummer: WO 2010/028685

(56) Entgegenhaltungen:
- DE-U1- 9 303 912
- DE-U1- 20 102 691
- DE-U1- 20 217 867
- FR-A- 2 789 286
- US-A- 5 911 812

## Beschreibung

### Technisches Umfeld

Die Erfindung betrifft einen Grill, insbesondere einen mobilen Grill mit einem von einem vierbeinigen Untergestell gehaltenen Glutkasten mit höhenverstellbarem Grillrostkasten darüber.

### Stand der Technik

Zur Zubereitung von Lebensmitteln wird insbesondere bei Gartenpartys gegrillt. Dazu werden Grills mit einem von einem vierbeinigen Untergestell gehaltenen Glutkasten eingesetzt, über der ein Grillrostkasten zur Aufnahme der zu garenden Lebensmittel angeordnet ist. Dieser Grillrostkasten ist bei einigen der bekannt gewordenen Grills auch höhenverstellbar, wobei in aller Regel der Grillrostkasten in unterschiedliche Höhenlagen gebracht werden kann. In dem Glutkasten verbrennt Holzkohle, mit deren Hitze die auf den Grillrostkasten aufgelegten Speisen gegart werden. In Anhängigkeit von der Intensität der Glut bedarf es einer Abstimmung der Höhe, in der die Speisen oberhalb der Glut auf einem Grillrostkasten liegen, um diese schonend zu garen, so dass sich eine nur äußerlich liegende Kruste ergibt. Um dies zu vermeiden sind Grills bekannt, bei denen der Grillrostkasten in der Höhe verstellbar ist.

Als nachteilig wird es dabei angesehen, dass Fett in die Glut tropft und unter Bildung Gesundheitsgefährdender Stoffe verbrennt. Hierzu sind Grillschalen vorgeschlagen worden, die jedoch verhindern, dass sich der typische Grillgeschmack entwickelt. Wegen des Umganges mit heißen Materialien bedarf gerade die Höhenverstellung im Hinblick auf die Sicherheit einer besonderen Ausbildung, so dass die dazu notwendige Mechanik aufwendig ist.

Ein solcher Grill ist aus dem Dokument US 5 911 812 bekannt.

### Aufgabe

Davon ausgehend stellt sich die Aufgabe einen Grill so weiter zu entwickeln, dass bei sicherem Grillbetrieb sowohl die Intensität, mit der die Glut auf das Grillgut einwirkt, einstellbar ist, wie auch ein Abtropfen von Fett in die Glut unterbunden ist, wobei der weiter gebildete Grill selbst wirtschaftlich herstellbar und einfach bedienbar sein soll.

### Lösung

Diese Aufgabe wird nach der Erfindung mit den Merkmalen des unabhängigen Hauptanspruchs gelöst; vorteilhafte Weiterbildungen und bevorzugte Ausführungsformen werden von den abhängigen Unteransprüchen definiert.

Vorteilhaft verlaufen die Stäbe des Grillrostkastens zur Längsseite des in aller Regel rechteckigen Grills. Eine Unterteilung des Grillrostkastens in einen Unterrost und einen Oberrost erlaubt es, den Unterrost gegenüber dem Oberrost verschiebbar auszubilden. Dabei trägt der Unterrost den Oberrost. Durch diese Ausbildung wird gewährleistet, dass die Lücken im Oberrost geöffnet bzw. verschlossen werden können. Damit ist eine Abstimmung der Intensität, mit der die Glut auf das Grillgut einwirkt, möglich.

Dadurch dass die Stäbe des Unterrostes als nach oben offene Rinnen ausgebildet sind, wird die Möglichkeit geschaffen, abtropfendes Fett aufzufangen und seitlich abzuleiten. Somit kann abtropfendes Fett abgefangen werden, bevor es in die Glut gelangt. Die Stäbe des Unterrostes erhalten dabei vorteilhaft eine geringe Schräge zur Außenseite des Grills hin und enden oberhalb eine längs dieser Außenseite angeordneten Rinne, die mit Wasser gefüllt, das ablaufende Fett aufnimmt.

Vorteilhaft werden die Stäbe des Oberrostes als nach unten offene Rinnen ausgebildet. Um Hitze speichern zu können, sind dabei die Rinnen mit Wärmespeicherndem Material gefüllt. Als ein solches Material wird vorteilhaft ein Einsatz aus Speckstein oder aber auch Vulkangestein eingesetzt. In bevorzugter Ausbildung werden die Stäbe des Oberrostes als Rohre ausgebildet, mit einem einen umgekehrten "U" entsprechenden Querschnitt, dessen Unterseite und dessen beide Enden verschlossen sind, wobei der Hohlraum mit Granulat des Wärmespeichernden Materials gefüllt ist.

Um den Grillrostkasten in seiner Höhe verstellen zu können, ist ein doppelter Seil- oder Kettentrieb vorgesehen. Von einer Welle mit zwei festen Antriebsrollen läuft je ein Seil bzw. eine Kette zu je einer losen Rolle, die ihrerseits mit dem Grillrostkasten verbunden sind. Der Grillrostkasten wird so mit einem doppelten Flaschenzug bewegt, was seine Höhenverstellung auch bei größeren Gewichten erleichtert. Die mit den Beinen zusammenwirkenden Führungen verhindern aufgrund ihrer Länge ein Verkanten.

Der Antrieb erfolgt über eine Welle mit zwei im Abstand etwa der Grill-Breite angeordneten Seil- oder Kettenrädern, die mit Mitteln zum Sperren der Einstellung versehen sind. Als ein solches Sperrmittel haben sich Sperrklinken bewährt, die selbst einfallend mit Sperrnuten o. dgl. zusammenwirken. Diese sind an dem der Bedienungsseite zugeordneten Teil der Welle oder an dem Seil- oder Kettenrad vorgesehen. Ein bevorzugtes Sperrmittel ist dadurch gegeben, dass die Welle einen polygonalen, vorteilhaft einen quadratischen oder sechseckigen Querschnitt aufweist, der mit einer Sperrklinke mit diesem Querschnitt entsprechend ausgebildeten Ausschnitt zusammenwirkt, wobei diese so angeordnet ist, dass sie nach Lösen von selbst wieder in Sperrlage zurück fällt.

Das Untergestell besteht aus den vier Beinen, die als hohle Rechteckrohre ausgebildet sind. Zwei der einen Schmalseite des Grills zugeordneten Beine weisen eingesetzt Räder auf, die beiden anderen sind mit Einsätzen versehen, die zur Höhenverstellung ausziehbar sind. So kann der Grill einfach verfahren und immer so gestellt werden, dass der Grillrostkasten horizontal ausgerichtet liegt. Vorteilhaft wird der Grill mit einer Abdeckhaube versehen, die abnehmbar oder aufklappbar ist. Durch eine solche Ausbildung kann eine Wärmespeicherung erfolgen, so dass gegarte Speisen auch länger warm gehalten werden können.

### Beschreibung der Zeichnungen

Das Wesen der Erfindung wird an Hand der in den Figuren 1 - 5 dargestellten Ausführungsbeispiel näher erläutert; dabei zeigen:
- Figur 1: eine perspektivische Ansicht des erfindungsgemäßen Grills;
- Figur 2a: eine geschnittene Ansicht gemäß der Schnittlinie II - II in Figur 1, wobei die verschiebbaren Stäbe in einer ersten Situation dargestellt sind;
- Figur 2b: eine weitere geschnittene Ansicht gemäß der Schnittlinie II - II in Figur 1, wobei die verschiebbaren Stäbe in einer zweiten Situation dargestellt sind;
- Figur 3: eine geschnittene Ansicht gemäß der Schnittlinie III - III in Figur 1;
- Figur 4: eine Detailansicht der Höhenverstellung des Glutkastens mit Sicherung;
- Figur 5: eine Detailansicht des Fettaustrags im Bereich der Seitenführung des Unterrostes.

### Ausführungsbeispiele

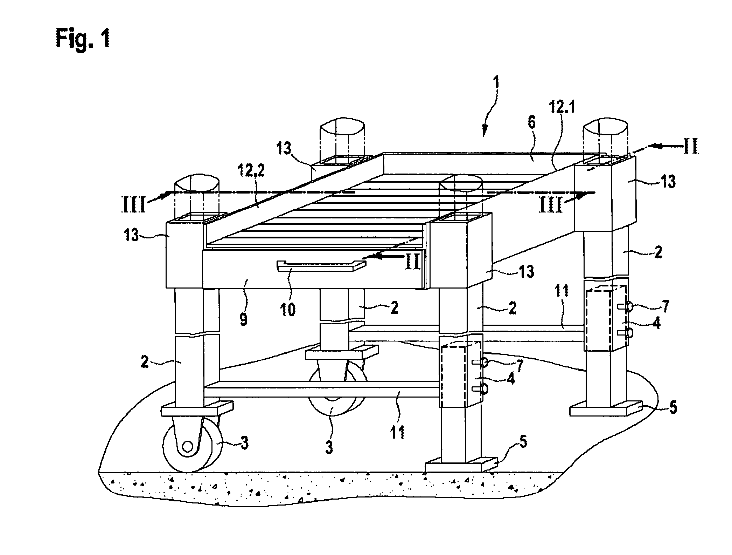

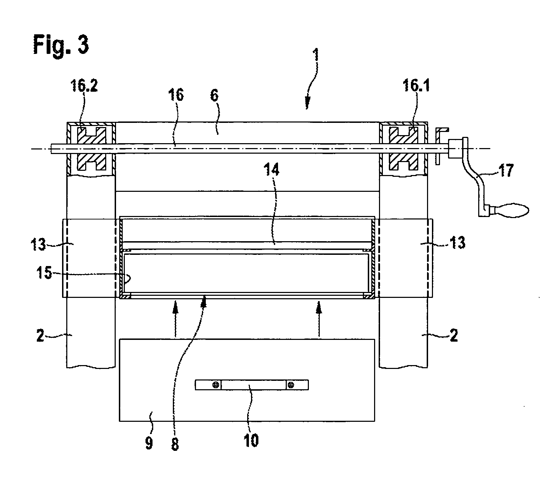

Der Grill 1 weist - wie in der Figur 1 und 3 dargestellt - ein Untergestell mit den Beinen 2 auf, von denen zwei Beine 2 mit Antriebsrollen 3 und von den beiden anderen zumindest eines der Beine 2, vorteilhaft beide, mit einem Verstelleinsatz 4 versehen sind. Die Antriebsrollen 3 erlauben ein leichtes Transportieren, wobei die Verstelleinsätze 4 mit der auf dem Boden aufstehenden Fußplatten 5 ein horizontales Ausrichten des Grillrostkastens 6 ermöglichen. Feststeller 7 sichern die gewählte Ausrichtung. Von einer der Seiten des Grills 1, ist der Glutkasten 8 zugängig, dessen Aschekasten 9 mittels des Griffes 10 entnommen werden kann. Zur Verbesserung der Stabilität sind zumindest die Beine 2 der einander gegenüber liegenden Seiten, vorzugsweise der Längsseiten des Grills 1, mit unteren Streben 11 verbunden.

Der Glutkasten 8 weist seitliche Rostaufnahmen 12.1 und 12.2 auf, die außen mit Führungshülsen 13 versehen sind, Diese Führungshülsen 13 umfassen die Beine 2 und erlauben so eine Höhenverstellung des gesamten Glutkastens 8, wobei ein Verkanten der relativ großen Führungslänge unterbunden ist. Im Inneren der seitlichen Rostaufnahmen 12.1 und 12.2 sind der Kohlerost 14 sowie der Aschekasten 15 beide herausnehmbar und geführt. Eine Höhenverstellung erlaubt das Einstellen des Höhenabstandes zwischen Glutkasten 8 und Grillrostkasten 6.

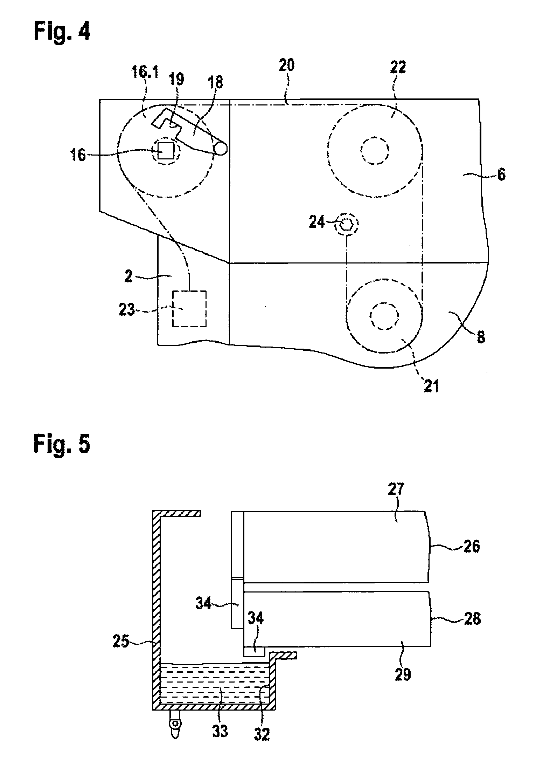

Diese Höhenverstellung erfolgt über einen Antrieb, dargestellt in den Figuren 3 und 4, mit je einem an beiden Seiten des Grillrostkastens 6 vorgesehenen Antrieb mit Seil-/Kettenzug. Dieser Antrieb umfasst zwei mit einer Welle 16 verbundene Antriebsrollen 16.1 und 16.2, die über den Beinen 2 auf beiden Seiten des Grillrostkastens 6 angeordnet sind. Um den Antrieb über den Beinen 2 vorzusehen, sind auf deren oberen Enden Antriebsaufsätze mit erweitertem Querschnitt vorgesehen. Die Welle 16 ist herausgeführt und mit einem die Betätigung erlaubenden Handkurbel 17 versehen. Weiter wirkt mit der Welle 16 eine Sperrklinke als Sicherungshebel 18 zusammen. Dieser weist eine Ausnehmung 19 auf, der sich formschlüssig um die polygonal ausgebildete Welle 16 - hier quadratisch dargestellt - legt und so deren Bewegbarkeit unterbindet. Dieser Sicherungshebel 18 ist frei drehbar an den Grillrostkasten 6 angelenkt, so dass er zum Lösen angehoben wird, und von selbst wieder in die Sperrstellung zurückfallen kann.

Zur Höhenverstellung des Glutkastens 8 ist der Antrieb mit über auf beiden Seiten vorgesehenen Seil- oder Kettenzüge versehen. Die Seile oder Ketten 20 werden von den Antriebsrollen 16.1 und 16.2 über eine am Glutkasten 8 festen Umlenkrolle 21 sowie eine Umlenkrolle 22 am Grillrostkasten 6 geführt.

Die freien Enden der Seile bzw. Ketten 20 werden von den Antriebsrollen 16.1 und 16.2 aufgewickelt. Alternativ werden die freien Enden der Seile bzw. Ketten 20 in die zugeordneten Beine 2 geleitet und dort von Gegengewichten 23 unter Spannung gehalten. Vorteilhaft ist es, wenn am Glutkasten 8 die Umlenkrolle 21 als Flaschenzug wirkende Umlenkrolle vorgesehen ist, wobei die zugeordneten Enden der Seile bzw. Ketten 20 an Fixpunkten 24 am Grillrostkasten 6 angeschlagen sind.

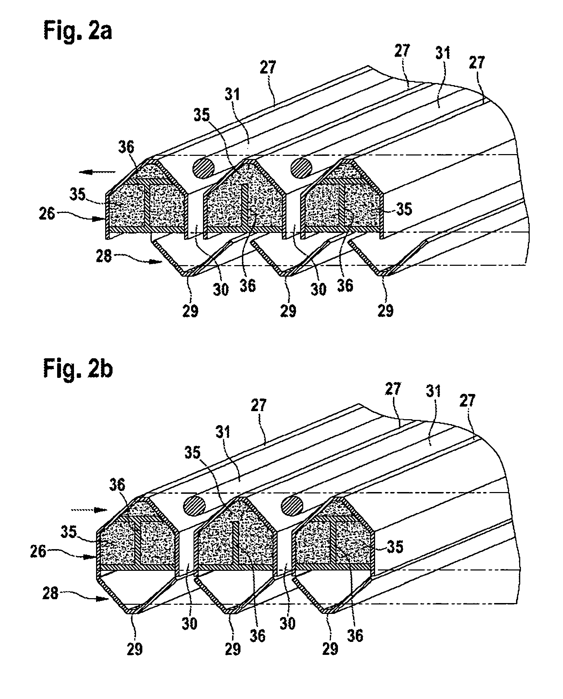

Der Grillrostkasten 6 weist zumindest an zwei einander gegenüber liegenden Seiten des Grills 1 Seitenführungen 25 auf, wie sie in der Detailansicht der Figur 5 gezeigt ist. Diese Seitenführungen 25 nehmen den Oberrost 26 auf, der den eigentlichen Grillrostkasten 6 bildet. Der Oberrost 26, dargestellt in den Figuren 2a und 2b, besteht aus parallel ausgerichteten profilierten Stäben 27. Unter diesem Oberrost 26 ist ein Unterrost 28 vorgesehen, der mit nach oben offenen Stäben 29 versehen ist. Diese in V-Form nach oben hin geöffneten Stäbe 29 bilden Ablaufrinnen für abtropfendes Fett. Dabei sind, wie aus der Zusammenschau von Figur 2a und Figur 2b zu erkennen ist, der Oberrost 26 und Unterrost 28 horizontal gegeneinander bewegbar. Dadurch lassen sich die Spalte 30 zwischen den profilierten Stäben 27 des Oberrostes 26 öffnen bzw. verschließen. Bei offenen Spalten 30 gemäß der Figur 2b kann die Hitze des Glutbettes voll auf das Grillgut einwirken, bei geschlossenen Spalten 30 gemäß der Figur 2a entfällt diese direkte Einwirkung, jedoch wird dann abtropfendes Fett in den Stäben 29 aufgefangen. Zwischenstellungen, hier nicht näher dargestellt, erlauben eine für den gewählten Zweck günstige Einstellung.

In den Lücken der Stäbe 27 des Oberrostes 26 können Zwischenstäbe 31 angeordnet sein, um die Abstände in Grenzen halten zu können. Sind die Stäbe 27 mit einer ausgeprägten V-Profilierung versehen, können diese Zwischenstäbe 31 das Spaltmaß zwischen den Stäben 27 so weit abdecken, dass eine direkte Gluteinwirkung auf die zu garenden Speisen vermieden wird. Mit dieser Ausbildung wird das Entstehen gesundheitsschädlicher Stoffe vorgebeugt.

Wie insbesondere aus der Figur 5 ersichtlich ist, wird das aufgefangene Fett durch die nach oben offenen Stäbe 29 des Unterrostes 28, die über die Seitenführung 25 reichen, seitlich abgeführt und gelangt so in an den Innenseiten der Seitenführungen 25 vorgesehene Seitenrinnen 32, die eine Wasserfüllung 33 enthalten. Dabei können die Stäbe 29 über der Wasserfüllung 33 frei enden, sie können aber auch über der Wasserfüllung 33 Abtropfeinrichtungen aufweisen.

Die offenen Seitenkanten der Seitenrinnen 32 tragen die nach oben offenen Stäbe 29 des Unterrostes 28, wobei zumindest einige dieser Stäbe 29 Führungsnasen 34 aufweisen, die an den Seitenrinnen 32 anliegen. Über die so in die Seitenrinnen 32 mündenden Stäbe 29 wird das ablaufende Fett in die Seitenrinnen 32 übergeleitet.

In den Figuren 2a und 2b ist eine besonders vorteilhafte Ausgestaltung der Erfindung dargestellt. Zur besseren Wärmeausnutzung sind hierbei die als Hohlprofil ausgebildeten Stäbe 27 des Oberrostes 26 mit Wärmespeichernden Materialien 35 gefüllt. Damit eine schnelle und hohe Eindringung bzw. Durchdringung der Wärme in das Material 35 gegeben ist, ist das Material 35 von Profilen 36 durchsetzt, wobei diese beispielsweise wie dargestellt T-förmig oder stegförmig ausgebildet sein können.

Gemäß einer Alternative, nicht näher dargestellt, können die Stäbe 27 als Rohre ausgebildet sein, die mit Stoffen gefüllt werden können. Als Füllmaterial können auch geformte Einsätze zum Einsatz kommen, wie aus Speckstein geformte Stangen o. dgl.

Im erstgenannten Fall können Granulate etwa von Speckstein o. dgl. eingesetzt werden. Um so gegarte Speisen auch über einen längeren Zeitraum warm halten zu können, kann der Grill 1 mit einer Abdeckhaube, nicht näher dargestellt, versehen sein, die vom Grill 1 abnehmbar ist. Vorteilhaft wird dabei die Abdeckhaube mittels Scharniere an den Grillrostkasten 6 angelenkt und mit einem Handkurbel versehen.

### Bezugszeichenliste

- 01: Grill
- 02: Bein
- 03: Rolle
- 04: Verstelleinsatz
- 05: Fußplatte
- 06: Grillrostkasten
- 07: Feststeller
- 08: Glutkasten
- 09: Aschekasten
- 10: Griff
- 11: Untere Strebe
- 12.1: / 12.2 Seitliche Rostaufnahme
- 13: Führungshülsen
- 14: Kohlerost
- 15: Aschekasten
- 16: Welle
- 16.1: / 16.2 Antriebsrollen
- 17: Handkurbel
- 18: Sicherungshebel
- 19: Ausnehmung
- 20: Seile/Ketten
- 21: Umlenkrolle Glutkasten
- 22: Umlenkrolle Grillrostkasten
- 23: Gegengewicht
- 24: Fixpunkt
- 25: Seitenführung
- 26: Oberrost
- 27: Stäbe oben
- 28: Unterrost
- 29: Stäbe unten
- 30: Spalte
- 31: Zwischenstäbe
- 32: Seitenrinne
- 33: Wasserfüllung
- 34: Führungsnase
- 35: Materialien
- 36: Profile

## Patentansprüche

1. Grill, insbesondere mobiler Grill, mit einem von einem vierbeinigen Untergestell gehaltenen Glutkasten (8) und Grillrostkasten (6), deren Abstand verstellbar ist, wobei im Grillrostkasten (6) als Grillrost ein mit Stäben (29) versehener Unterrost (28) und ein mit Stäben (27) versehener Oberrost (26) angeordnet sind, wobei beide Roste (26, 28) gegeneinander verschiebbar sind,
**dadurch gekennzeichnet,**
**dass** der Grillrostkasten (6) Seitenführungen (25) als Auflager für den Oberrost (26) und den Unterost (28) aufweist und die Stäbe (27) des Oberrostes (26) als Hohlprofile für einen Wärmespeicher und die Stäbe (29) des Unterrostes (28) als nach oben offene Profile ausgebildet sind.

2. Grill nach Anspruch 1, **dadurch gekennzeichnet, dass** die Seitenführung (25) mit einer Seitenrinne (32) versehen ist, auf deren freien Rand die nach oben offenen Stäbe (29) des Unterrostes (28) aufliegen.

3. Grill nach Anspruch 2, **dadurch gekennzeichnet, dass** zumindest einige der nach oben offenen Stäbe (29) des Unterrostes (28) Führungsnasen (34) aufweisen, die beidseits hinter die freien Ränder der Seitenrinne greifend, eine Bewegbarkeit quer zur Verschieberichtung von Ober- und Unterrost (26, 28) gegeneinander unterbinden.

4. Grill nach einem der Ansprüche 1 bis 3, **dadurch gekennzeichnet, dass** jeweils zwischen zwei der Stäbe (27) des Oberrostes (26) ein Zwischenstab (31) mit rundem Querschnitt eingefügt ist.

5. Grill nach einem der Ansprüche 1 bis 4, **dadurch gekennzeichnet, dass** die Stäbe (27) des Oberrostes (26) im Wesentlichen V-förmig profiliert sind.

6. Grill nach einem der Ansprüche 1 bis 5, **dadurch gekennzeichnet, dass** die Stäbe (27) des Oberrostes (26) eine Wärmespeichernde Einlage aufweisen.

7. Grill nach einem der Ansprüche 1 bis 6, **dadurch gekennzeichnet, dass** die Stäbe (27) des Oberrostes (26) eine Wärmespeichernde Füllung aufweisen, vorzugsweise Speckstein-Granulat.

8. Grill nach einem der Ansprüche 1 bis 7, **dadurch gekennzeichnet, dass** der Glutkasten (8) an den Beinen (2) des Untergestells in Beinrichtung verschiebbar ist.

9. Grill nach Anspruch 8, **dadurch gekennzeichnet, dass** der Glutkasten (8) zu den Beinen (2) korrespondierende Führungshülsen (13) aufweist.

10. Grill nach Anspruch 8 oder 9, **dadurch gekennzeichnet, dass** zur Höhenverstellung des Glutkastens (8) ein vorzugsweise handbetätigter Antrieb vorgesehen ist.

11. Grill nach Anspruch 10, **dadurch gekennzeichnet, dass** als Antrieb ein doppelter Seil- oder Kettenantrieb vorgesehen ist, bei dem am oberen Ende zweier benachbarter Beine (2) des Untergestells eine Welle (16) mit zwei, die Seile oder Ketten (20) aufnehmenden Antriebsrollen (16.1) und (16.2) angeordnet ist, deren ablaufende Seile oder Ketten (20) über eine feste, am Grillrostkasten (6) angeordnete Umlenkrolle (22) sowie eine am Glutkasten (8) angeordnete Umlenkrolle (21) geführt sind.

12. Grill nach Anspruch 9 oder 10, **dadurch gekennzeichnet, dass** die die Seile oder Ketten (20) aufnehmenden Antriebsrollen (16.1) und (16.2) als Aufwickelrollen für die Seile oder Ketten (20) ausgebildet sind.

13. Grill nach Anspruch 9 oder 10, **dadurch gekennzeichnet, dass** die die Seile oder Ketten (20) aufnehmenden Antriebsrollen (16.1) und (16.2) als Umlenkrollen für die Seile oder Ketten (20) ausgebildet sind, die in die Hohlräume der zugeordneten Beine (2) geleitet und mit Gegengewichten (23) unter Spannung gehalten sind.

14. Grill nach einem der Ansprüche 10 bis 13, **dadurch gekennzeichnet, dass** der Antrieb mit einer auslösbaren Sperre versehen ist.

15. Grill nach Anspruch 14, **dadurch gekennzeichnet, dass** die Sperre als Sicherungshebel (18) ausgebildet ist, der frei drehbar an dem Grillrostkasten (6) angelenkt wird, so dass er zum Lösen angehoben, von selbst wieder in Sperrstellung zurückfallen kann.

16. Grill nach einem der Ansprüche 1 bis 15, **dadurch gekennzeichnet, dass** der Grill (1) mit einer Abdeckhaube versehen ist, die vom Grill (1) abnehmbar ausgebildet oder an diesen aufklappbar angelenkt ist.

## Claims

1. A grill, in particular a mobile grill, comprising an embers box (8) held by a four-legged underframe, and a grill grate box (6), the distance of which can be adjusted, wherein a lower grate (28), which is provided with bars (29), and an upper grate (26), which is provided with bars (27), are arranged as grill grate in the grill grate box (6), wherein both grates (26, 28) can be displaced relative to one another,
**characterized in**
**that** the grill grate box (6) encompasses lateral guides (25) as support for the upper grate (26) and the lower grate (28), and the bars (27) of the upper grate (26) are embodied as hollow profiles for a heat store, and the bars (29) of the lower grate (28) are embodied as profiles, which are open to the top.

2. The grill according to claim 1, **characterized in that** the lateral guide (25) is provided with a lateral chamfer (32), on the free edge of which the bars (29) of the lower grate (28), which are open to the top, rest.

3. The grill according to claim 2, **characterized in that** at least some of the bars (29) of the lower grate (28), which are open to the top, encompass guide noses (34), which, engaging behind the free edges of the side chamber on both sides, prevent a movability at right angles to the displacement direction of upper and lower grate (26, 28) relative to one another.

4. The grill according to one of claims 1 to 3, **characterized in that** an intermediate bar (31) having a round cross section is in each case inserted between two of the bars (27) of the upper grate (26).

5. The grill according to one of claims 1 to 4, **characterized in that** the bars (27) of the upper grate (26) are profiled in a substantially V-shape manner.

6. The grill according to one of claims 1 to 5, **characterized in that** the bars (27) of the upper grate (26) encompass a heat-storing insert.

7. The grill according to one of claims 1 to 6, **characterized in that** the bars (27) of the upper grate (26) encompass a heat-storing filling, preferably soapstone granulate.

8. The grill according to one of claims 1 to 7, **characterized in that** the embers box (8) can be displaced in leg direction at the legs (2) of the underframe.

9. The grill according to claim 8, **characterized in that** the embers box (8) encompasses guide sleeves (13), which correspond to the legs (2).

10. The grill according to claim 8 or 9, **characterized in that** provision is made for the height-adjustment of the embers box (8) for a preferably manually operated drive.

11. The grill according to claim 10, **characterized in that** provision is made for a double rope or chain drive as drive, in the case of which a shaft (16) comprising two drive rollers (16.1) and (16.2), which accommodate ropes or chains (20), is arranged on the upper end of two adjacent legs (2) of the underframe, and the running ropes or chains (20) of which are guided via a fixed deflection roller (22), which is arranged on the grill grate box (6), as well as via a deflection roller (21), which is arranged on the embers box (8).

12. The grill according to claim 9 or 10, **characterized in that** the drive rollers (16.1) and (16.2), which accommodate ropes or chains (20), are embodied as wind-up rollers for the ropes or chains (20).

13. The grill according to claim 9 or 10, **characterized in that** the drive rollers (16.1) and (16.2), which accommodate the ropes or chains (20), are embodied as deflection rollers for the ropes or chains (20), which are guided into the hollow spaces of the assigned legs (2) and which are kept under tension by means of counterweights (23).

14. The grill according to one of claims 10 to 13, **characterized in that** the drive is provided with an interlock, which can be triggered.

15. The grill according to claim 14, **characterized in that** the interlock is embodied as a safety lever (18), which is articulated on the grill grate box (6) in a freely rotatable manner, so that it can be lifted for being disengaged and can fall back into the locked position again by itself.

16. The grill according to one of claims 1 to 15, **characterized in that** the grill (1) is provided with a cover hood, which is embodied so as to be capable of being removed from the grill (1) or which is articulated thereon so as to be capable of being folded open.

## Revendications

1. Barbecue, notamment barbecue mobile, avec un caisson à braises (8) et un caisson à grille (6), maintenus par un châssis, dont la distance est réglable, dans le caisson à grille (6) étant disposées en tant que grille une grille inférieure (28) munie de barres (29) et une grille supérieure (26) munie de barres (27), les deux grilles (26, 28) étant déplaçables l'une vers l'autre,
**caractérisé en ce que**
le caisson à grille (6) comporte des guidages latéraux (25) en tant qu'appui pour la grille supérieure (26) et pour la grille inférieure (28) et **en ce que** les barres (27) de la grille supérieure (26) sont conçues en tant que profilés creux pour un accumulateur de chaleur et **en ce que** les barres (29) de la grille inférieure (28) sont conçues en tant que profilés ouverts sur le dessus.

2. Barbecue selon la revendication 1, **caractérisé en ce que** le guidage latéral (25) est muni d'une rigole latérale (32) sur le bord libre de laquelle s'appuient des barres (29) de la grille inférieure (28).

3. Barbecue selon la revendication 2, **caractérisé en ce qu'**au moins certaines des barres (29) de la grille inférieure (28) ouvertes sur le dessus comportent des tenons de guidage (34) qui en s'engageant de part et d'autre derrière les bords libres des rigoles latérales empêchent une mobilité, l'une vers l'autre, à la transversale de la direction de déplacement de la grille supérieure et de la grille inférieure (26, 28).

4. Barbecue selon l'une quelconque des revendications 1 à 3, caractérisé en ce chaque fois entre deux barres (27) de la grille supérieure (26) est insérée une barre intermédiaire (31) à section transversale ronde.

5. Barbecue selon l'une quelconque des revendications 1 à 4, **caractérisé en ce que** les barres (27) de la grille supérieure (26) sont profilées sensiblement en forme de V.

6. Barbecue selon l'une quelconque des revendications 1 à 5, **caractérisé en ce que** les barres (27) de la grille supérieure (26) comportent un élément rapporté accumulateur de chaleur.

7. Barbecue selon l'une quelconque des revendications 1 à 6, **caractérisé en ce que** les barres (27) de la grille supérieure (26) comportent un remplissage accumulateur de chaleur, de préférence des granulés de stéatite.

8. Barbecue selon l'une quelconque des revendications 1 à 7, **caractérisé en ce que** le caisson à braises (8) est déplaçable sur les pieds (2) du châssis, en direction des pieds.

9. Barbecue selon la revendication 8, **caractérisé en ce que** le caisson à braises (8) comporte des douilles de guidage (13) correspondant aux pieds (2).

10. Barbecue selon la revendication 8 ou la revendication 9, **caractérisé en ce que** pour l'ajustage en hauteur du caisson à braises (8) il est prévu un entrainement à actionnement de préférence manuel.

11. Barbecue selon la revendication 10, **caractérisé en ce qu'**en tant qu'entrainement, il est prévu une commande par câble ou par chaîne pour laquelle sur l'extrémité supérieure de deux pieds (2) voisins du châssis est disposé un arbre (16) avec deux galets d'entraînement (16.1) et (16.2) recevant les câbles ou les chaînes (20), dont les câbles ou les chaînes (20) qui se déroulent sont guidé(e)s, par l'intermédiaire d'un galet de renvoi (22) disposé sur le caisson à grille (6) ainsi que par un galet de renvoi (21) disposé sur le caisson à braises (8).

12. Barbecue selon la revendication 9 ou la revendication 10, **caractérisé en ce que** les galets d'entraînement (16.1) et (16.2) recevant les câbles ou les chaînes (20) sont conçus en tant que bobines d'enroulement pour les câbles ou les chaînes (20).

13. Barbecue selon la revendication 9 ou la revendication 10, **caractérisé en ce que** les galets d'entraînement (16.1) et (16.2) recevant les câbles ou les chaînes (20) sont conçus en tant que galets de renvoi pour les câbles ou les chaînes (20) qui sont conduit(e)s dans les cavités des pieds (2) associés et maintenus sous tension par des contrepoids (23).

14. Barbecue selon l'une quelconque des revendications 10 à 13, **caractérisé en ce que** l'entraînement est muni d'un dispositif de verrouillage déclenchable.

15. Barbecue selon la revendication 14, **caractérisé en ce que** le dispositif de verrouillage est conçu en tant que levier de blocage (18) que l'on articule de manière librement rotative sur le caisson à grille (6), de sorte à pouvoir le relever pour le libérer et à pouvoir retomber automatiquement dans la position de blocage.

16. Barbecue selon l'une quelconque des revendications 1 à 15, **caractérisé en ce que** le barbecue (1) est muni d'un capot de fermeture qui est conçu pour être amovible sur le barbecue (1) ou en étant articulé de manière relevable sur ce dernier.
